Europäisches Patentamt

European Patent Office

Office européen des brevets

(19)

(11) Veröffentlichungsnummer: **0 037 503**
**B1**

(12) **EUROPÄISCHE PATENTSCHRIFT**

(45) Veröffentlichungstag der Patentschrift:
**20.06.84**

(21) Anmeldenummer: **81102146.8**

(22) Anmeldetag: **21.03.81**

(51) Int. Cl.³: **F 23 D 11/44,** F 23 D 11/46,
F 23 L 15/04, F 23 C 7/06

(54) **Brenner zur Ausbildung und Verbrennung eines zündfähigen Gemisches aus einem flüssigen Brennstoff und Verbrennungsluft.**

(30) Priorität: **05.04.80 DE 3013428**
**18.12.80 DE 3047702**

(43) Veröffentlichungstag der Anmeldung:
**14.10.81 Patentblatt 81/41**

(45) Bekanntmachung des Hinweises auf die Patenterteilung:
**20.06.84 Patentblatt 84/25**

(84) Benannte Vertragsstaaten:
**AT BE CH FR GB IT LI NL SE**

(56) Entgegenhaltungen:
**DE - A - 2 912 519**
**DE - C - 491 146**
**FR - A - 445 544**

(73) Patentinhaber: **Kernforschungsanlage Jülich Gesellschaft mit beschränkter Haftung, Postfach 1913, D-5170 Jülich (DE)**

(72) Erfinder: **Förster, Siegfried, Dr.-Ing., Ottenfeld 1, D-5110 Alsdorf (DE)**

EP 0 037 503 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

## Beschreibung

Die Erfindung bezieht sich auf einen Brenner zur Ausbildung und Verbrennung eines zündfähigen Gemisches aus flüssigem Brennstoff und Verbrennungsluft, der zur Zufuhr von Brennstoff eine geschlossene Brennstoffkammer mit für den Brennstoff durchlässigen porösen Wänden aufweist. Die Brennstoffkammer ist in einem Strömungsraum angeordnet, der von vorgewärmter Verbrennungsluft zur Verbrennungszone durchströmt wird.

Brenner dieser Art sind sowohl für Industrieöfen als auch für Wärmeerzeuger kleinerer Einheit bestimmt. Bei diesen Brennern durchdringt der flüssige Brennstoff die porösen Wände der Brennstoffkammer und verdunstet in die vorgewärmte, im Strömungsraum strömende Verbrennungsluft. Infolge der Verdunstung des flüssigen Brennstoffs auf der Oberfläche der porösen Wände wird eine unerwünschte Überhitzung des flüssigen Brennstoffs, die zum Cracken führt, verhindert. Im Strömungsraum werden Brennstoff und Verbrennungsluft miteinander vermischt und als zündfähiges Gemisch in die Verbrennungszone eingeführt. Vergleiche DE-A-2 912 519.

Es wird angestrebt, die An- und Abschaltphase des Brenners so zu leiten, dass möglichst geringe Brennstoffverluste auftreten. Beim Kaltstart entstehen Brennstoffverluste im allgemeinen dadurch, dass ein Teil des dem Brenner zugeführten Brennstoffs infolge noch zu geringer Brennertemperatur unverbrannt ins Abgas gelangt und somit die Umwelt belastet. Auch beim Abschalten des Brenners sind Massnahmen zur Verhinderung von Brennstoffverlusten erforderlich. So ist bei der Verdunstung von Brennstoff in vorgewärmte Verbrennungsluft beim Abschalten ein Nachverdunsten sowie jeglicher weiterer Austritt von Brennstoff in den Brennraum zu vermeiden. Letzteres ist auch aus sicherheitstechnischen Gründen notwendig, damit insbesondere bei Störfällen keine Nachverbrennung auftritt.

Aufgabe der Erfindung ist es daher, einen Brenner zu schaffen, der hinsichtlich des Brennstoffbedarfs günstige Kaltstarteigenschaften aufweist und der sich darüber hinaus sowohl im Normalfall als auch im Störfall ohne Nachverbrennung abschalten lässt.

Diese Aufgabe wird gemäss der Erfindung bei einem Brenner der eingangs genannten Art durch die im Patentanspruch 1 angegebene Ausbildung gelöst. Danach sind die den Brennstoff leitenden porösen Wände der Brennstoffkammer vom Strömungsraum, der die Verbrennungsluft führt, zum Ein- und Abschalten des Brenners abtrennbar, so dass während dieser Phasen der Verdunstungsvorgang unterbrechbar ist. Dies kann beispielsweise durch einen Mantel geschehen, der so über die poröse Wand gestülpt wird, dass kein Brennstoff in den Strömungsraum gelangen kann. Beim Einschalten des Brenners wird die Trennung zwischen porösen Wänden und Strömungsraum in Abhängigkeit von der Temperatur der Verbrennungsluft im Strömungsraum gesteuert. Ist die Verbrennungsluft soweit vorerhitzt, dass im Strömungsraum ein zündfähiges, stöchiometrisches Brennstoff-Verbrennungsluft-Gemisch ausbildbar ist, werden die porösen Wände der Verbrennungsluft ausgesetzt. Beim Abschalten des Brenners werden die porösen Wände erneut vom Strömungsraum getrennt, so dass ein Verdunsten von Brennstoff von der Oberfläche der porösen Wände in die Verbrennungsluft im Strömungsraum unterbunden ist.

Bevorzugt ist die Brennstoffkammer gegen die Kraft einer Feder in den Strömungsraum verschiebbar angeordnet (Patentanspruch 2). Die Federkraft ist so eingestellt, dass die Brennstoffkammer von der Feder aus dem Strömungsraum herausgehalten wird. Eingeschoben wird die Brennstoffkammer in Abhängigkeit von der Temperatur im Strömungsraum. Hat die Verbrennungsluft die für die Ausbildung des zündfähigen, stöchiometrischen Brennstoff-Verbrennungsluft-Gemisches erforderliche Temperatur erreicht, so wird die Brennstoffkammer in den Strömungsraum eingeführt. Beim Abschalten des Brenners wird die Brennstoffkammer unter Einwirkung der Feder aus dem Strömungsraum zurückgezogen.

In Ausgestaltung der Erfindung ist vorgesehen, die Brennstoffkammer hydraulisch verschiebbar anzuordnen (Patentanspruch 3) sowie als hydraulisches Betriebsmittel den flüssigen Brennstoff selbst zu nutzen (Patentanspruch 4). Es ergibt sich so ein einfacher, kompakter Aufbau des Brenners. Bei einer in Patentanspruch 5 angegebenen Ausbildung des Brenners entfällt zusätzlich eine gesonderte Brennstoffleitung zur verschiebbar angeordneten Brennstoffkammer.

Die Erfindung und weitere Ausgestaltungen der Erfindung werden anhand von Ausführungsbeispielen, die in der Zeichnung schematisch wiedergegeben sind, näher erläutert.

Es zeigen:

Fig. 1 Brenner mit verschiebbarer Brennstoffkammer;

Fig. 2 Brenner mit an einem Hydraulikkolben befestigter Brennstoffkammer.

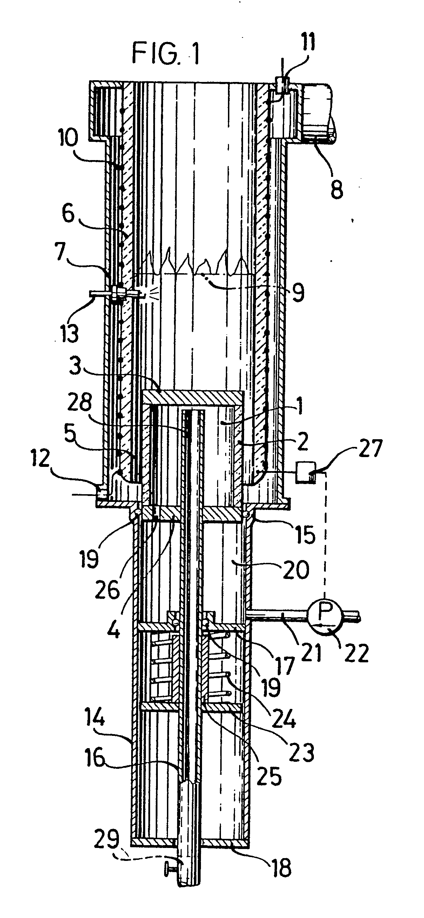

Wie aus Fig. 1 ersichtlich ist, weist der Brenner eine Brennstoffkammer 1 mit für den Brennstoff durchlässigen porösen Wänden 2 auf. Im Ausführungsbeispiel ist die Brennstoffkammer 1 zylindrisch ausgeführt und an beiden Stirnseiten mit Verschlussplatten 3, 4 abgedeckt. Die Verschlussplatten sind fluchtend auf der zylindrischen, porösen Wand 2 der Brennstoffkammer 1 aufgesetzt und weisen eine glatte äussere zylindrische Oberfläche auf.

Die Brennstoffkammer 1 ist verschieblich gelagert und in Fig. 1 in ihrer Betriebsstellung innerhalb eines von Verbrennungsluft durchströmten Strömungsraumes 5 dargestellt. Die Brennstoffkammer 1 ragt zentrisch in den Strömungsraum 5 hinein, der als Ringraum zwischen der äusseren Oberfläche der porösen Wand 2 und einem inneren Wärmetauscher 6 ausgeführt ist. Die Verbrennungsluft wird in den Strömungsraum 5 über ein Zuführungsrohr 7 eingeführt, das einen Rohranschluss 8 für die Verbrennungsluft aufweist. Das Zuführungsrohr 7 umgibt das Wärmetauscherrohr 6 und bildet zugleich die äussere Wandung der Verbrennungskammer. Die Verbrennung des Brennstoff-Luft-Gemisches erfolgt in einer Verbrennungszone 9 innerhalb des Wärmetauscherrohres 6. Im Ausführungsbeispiel besteht das Wärmetauscherrohr aus Keramik. Es lässt sich jedoch auch aus Metall ausbilden. Über das Wärmetauscherrohr 6 wird die im Zuführungsrohr 7 strömende Verbrennungsluft durch Wärmeabgabe aus der Verbrennungszone 9 vorgewärmt. Für eine Erwärmung der Verbrennungsluft beim Kaltstart sorgt eine elektrische Widerstandsheizung 10, die auf dem keramischen Wärmetauscher aufgewickelt ist und nach aussen geführte elektrische Anschlüsse 11, 12 aufweist. Im Strömungsraum 5 verdunstet in die vorgewärmte Verbrennungsluft der aus der Brennstoffkammer 1 durch die porösen Wände 2 hindurchtretende Brennstoff. Das Brennstoff-Luft-Gemisch wird zur Verbrennungszone 9 geführt und dort gezündet. Für den Start dient ein die Verbrennungszone eingeführter Zünder 13.

Die Brennstoffkammer 1 ist innerhalb eines Hydraulikzylinders 14, der am Zuführungsrohr 7 der Verbrennungskammer angeflanscht ist, verschieblich gelagert. Neben einem die Brennstoffkammer 1 am Umfang stützenden Lager 15 ist an der Brennstoffkammer 1 eine an der Verschlussplatte 4 befestigte rohrförmige Halterung 16 angebracht, die den Hydraulikzylinder 14 axial durchdringt und in einem Stützlager 17 geführt ist. Die Halterung 16 überragt die Verschlussplatte 4 der Brennstoffkammer 1 und ist durch eine Abdeckung 18 am äusseren Ende des Hydraulikzylinders 14 hindurchgeführt. Die Lager 15 und 17 im Hydraulikzylinder weisen Dichtringe 19 auf, die einen Innenraum 20 zwischen den beiden Lagern abdichten. Über einen Anschluss 21 am Hydraulikzylinder 14 lässt sich mit Hilfe einer Förderpumpe 22 Flüssigkeit in den Innenraum 20 einführen.

An dem das Stützlager 17 überragenden Ende der Halterung 16 ist eine verstellbare Auflage 23 für eine Feder 24 befestigt, der als Gegenlager das Stützlager 17 dient. Strömt in den Innenraum 20 — von der Förderpumpe 22 gefördert — hydraulisches Betriebsmittel ein, so wird die Brennstoffkammer 1 entgegen der Kraft der Feder 24 in den Strömungsraum 5 gedrückt. Die Endstellung der Brennstoffkammer 1 im Strömungsraum 5 wird von der Stellung der Auflage 23 an der Halterung 16 mit Anschlag 25 vorgegeben.

Als hydraulisches Betriebsmittel wird flüssiger Brennstoff in den Innenraum 20 des Hydraulikzylinders 14 gefördert. Dies erspart in vorteilhafter Weise eine zusätzliche Brennstoffleitung zur Brennstoffkammer 1 und führt zu einer sehr kompakten Bauweise des Brenners. Der im Innenraum 20 vorhandene Brennstoff strömt über eine Brennstoffleitung 26 aus dem Innenraum 20 des Hydraulikzylinders in den Innenraum der Brennstoffkammer 1 ein. Die Brennstoffleitung 26 ist im Ausführungsbeispiel als Drosselbohrung in der Verschlussplatte 4 der Brennstoffkammer 1 ausgebildet. Überschüssiger, an der Oberfläche der porösen Wand 2 der Brennstoffkammer 1 nicht verdunsteter Brennstoff wird über eine Ablaufleitung 28 aus dem Innenraum der Brennstoffkammer 1 abgeführt. Als Ablaufleitung dient im Ausführungsbeispiel vorteilhaft die rohrförmige Halterung 16, die im Innenraum der Brennstoffkammer von der Verschlussplatte 4 bis nahe an die Verschlussplatte 3 herangeführt ist, so dass ein Ringspalt verbleibt, durch den der Brennstoff in die Ablaufleitung 28 einströmen kann. Mittels eines Durchflussregelventils 29 in der Ablaufleitung wird der erforderliche Flüssigkeitsdruck in der Brennstoffkammer 1 eingestellt. Über die Ablaufleitung 28 wird der Brennstoff zum Vorratstank zurückgeführt, der in der Zeichnung nicht gesondert dargestellt ist.

Beim Abschalten der Förderpumpe 22 und beim Zurückziehen der Brennstoffkammer 1 in den Hydraulikzylinder kann der Brennstoff aus dem Innenraum 20 über die Brennstoffleitung 26 und aus der Brennstoffkammer 1 über die Ablaufleitung 28 abfliessen, so dass das Rückstellen der Kammer nicht gestört ist.

Ein Zirkulieren von Brennstoff in der Brennstoffkammer ist auch für den Betrieb des Brenners erwünscht. Der Brennstoff kann auf diese Weise vor Überhitzung geschützt werden, die zum Cracken führt. Die Siedetemperatur des Brennstoffs darf nicht erreicht werden.

Beim Start des Brenners befindet sich die Brennstoffkammer 1 innerhalb des Hydraulikzylinders 14. Ein Thermostat 27 misst die Temperatur im Wärmetauscher 6 an der Übergangsstelle der Verbrennungsluftführung zwischen Zuführungsrohr 7 und Strömungsraum 5 und schaltet über einen in der Zeichnung nicht dargestellten Schalter die Widerstandsheizung 10 ein. Bei ausreichend vorgewärmter Verbrennungsluft und entsprechender Temperatur am Thermostaten 27 wird an einem in der Zeichnung nicht dargestellten Regler ein Signal zum Einschalten der Förderpumpe 22 gegeben. Der dann in den Innenraum 20 des Hydraulikzylinders einströmende Brennstoff drückt die Brennstoffkammer 1 in den Strömungsraum 5 und fliesst zugleich durch die Brennstoffleitung 26 in den Innenraum der Brennstoffkammer 1 ein. Ein Teil des Brennstoffs durchdringt die porösen Wände 2 und verdunstet auf deren Oberfläche. Der Rest des Brennstoffs fliesst über die Ablaufleitung 28 vom Durchflussregelventil 29 gesteuert zurück in den Vorratstank. Im Strömungsraum 5 bildet sich ein stöchiometrisches Brennstoff-Luft-Gemisch, das in der Verbrennungszone 9 gezündet wird.

Bei Betrieb des Brenners wird nach ausreichender Aufheizung des Wärmetauscherrohres 6 die Widerstandsheizung 10 ausgeschaltet.

Zum Abschalten des Brenners wird die Förderpumpe 22 abgestellt und die Brennstoffzufuhr gesperrt. Im Innenraum 20 des Hydraulikzylinders 14 fällt der Flüssigkeitsdruck. Die Brennstoffkammer 1 wird von der Kraft der Feder 24 aus dem Strömungsraum 5 herausgezogen. Die Flamme in der Verbrennungszone 9 erlischt. Es werden auf diese Weise nicht nur Brennstoffverluste vermindert, es kann auch keine Nachverbrennung auftreten.

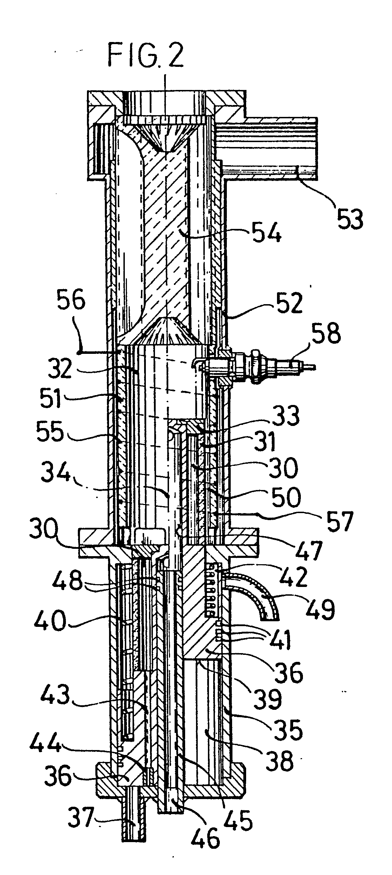

Bei dem in Fig. 2 dargestellten Brenner ist dafür Sorge getragen, dass bei Verwendung von Brennstoff als hydraulisches Betriebsmittel nicht unkontrolliert Brennstoff in den Strömungsraum eintritt und dabei eine einwandfreie Gemischbildung stört. Der Brenner weist in gleicher Weise wie das in Fig. 1 gezeigte Ausführungsbeispiel eine Brennstoffkammer 30 mit für den Brennstoff durchlässigen Wänden 31 auf. Die Brennstoffkammer 30 ist zylindrisch ausgeführt und an ihrer der Verbrennungszone 32 des Brenners zugewandten Stirnseite mit einer Verschlussplatte 33 abgedeckt. Die Verschlussplatte ist fluchtend auf der zylindrischen, porösen Wand 31 der Brennstoffkammer 30 aufgesetzt und weist an ihrem äusseren Rand eine glatte zylindrische Oberfläche auf.

In Fig. 2 ist die Brennstoffkammer 30 in zwei ihrer Einstellungen dargestellt. Der rechts von Symmetrieachse 34 der Brennstoffkammer abgebildete Teil zeigt die Brennstoffkammer bei Betrieb des Brenners in ihrer Betriebsstellung, der links abgebildete Teil zeigt die Brennstoffkammer 30 in ihrer Ruhestellung eingefahren in einen Hydraulikzylinder 35. Die Brennstoffkammer 1 ist an einem Hydraulikkolben 36 befestigt, der im Hydraulikzylinder 35 mittels flüssigem Brennstoff verschieblich gelagert ist. Der Brennstoff wird am Brennstoffzulauf 37 unter Druck in einen Innenraum 38 des Hydraulikzylinders 35 eingeführt und beaufschlagt den Hydraulikkolben 36 auf dessen der Brennstoffkammer 30 abgewandten Stirnseite 39. Der Hydraulikkolben 36 ist gegen die Kraft einer Feder 40 verschiebbar angeordnet. An seinem Umfang weist der Hydraulikkolben in Nuten eingesetzte Kolbenringe 41 auf, die den unter Druck stehenden Innenraum 38 des Hydraulikzylinders 35 gegenüber einem Hydraulikraum 42 abdichten, in den die Brennstoffkammer 30 beim Verstellen eingefahren wird.

Vom Innenraum 38 des Hydraulikzylinders 35 führt durch den Hydraulikkolben 36 hindurch eine Brennstoffleitung 43, die eine Drossel 44 aufweist und die Brennstoffkammer 30 mit Brennstoff versorgt. Überschüssiger Brennstoff fliesst aus der Brennstoffkammer 30 über einen Ablauf 45 mit Regelventil 46 ab. Der Ablauf 45 ist so am Hydraulikzylinder 35 befestigt, dass kein Brennstoff in die Umgebung austreten kann, und ragt in eine Ausnehmung 47 des Hydraulikkolbens 36 hinein, der auf Kolbenringen 48 gleitbar auf dem Ablauf 45 angeordnet ist.

In den Hydraulikraum 42 mündet eine Überlaufleitung 49 für aus der Brennstoffkammer 1 in den Hydraulikraum eindringenden Brennstoff. Die Überlaufleitung 49 sorgt darüber hinaus für den Abzug von Brennstoff, der infolge von Leckagen im Bereich der Kolbenringe 41 aus dem Innenraum 38 des Hydraulikzylinders 6 in den Hydraulikraum 42 gelangt.

In ihrer Betriebsstellung ragt die Brennstoffkammer 30 zentrisch in einen von vorgewärmter Verbrennungsluft durchströmbaren Strömungsraum 50 hinein, der im Ausführungsbeispiel als Ringraum zwischen porösen Wand 31 der Brennstoffkammer 30 und Innenwand eines Leitrohres 51 ausgeführt ist.

Ein unerwünschtes Überströmen von Brennstoff aus dem Hydraulikraum 42 in den Strömungsraum 50 wird dadurch verhindert, dass in den Hydraulikraum 42 eindringender Brennstoff über die Überlaufleitung 49 abfliessen kann.

Die Verbrennungsluft wird in den Strömungsraum 50 über ein Zuführungsrohr 52 eingeführt, das an einem mit Rohranschluss 53 verbundenen Rekuperator 54 für die Verbrennungsluft angeschlossen ist. Das Zuführungsrohr 52 umgibt das Leitrohr 51 und bildet zugleich die äussere Wand des Brenners. Die Verbrennung des Brennstoff-Luft-Gemisches erfolgt in der Verbrennungszone 32 innerhalb des Leitrohres 51. Im Ausführungsbeispiel bestehen das Leitrohr 51 und der der Verbrennungszone 32 nachgeschaltete Rekuperator 54 aus Keramik. Sie lassen sich jedoch je nach in der Verbrennungszone erzeugter Temperatur auch aus Metall ausbilden. Im Rekuperator 54 wird die dem Strömungsraum 50 zugeführte Verbrennungsluft durch die in der Verbrennungszone 32 erhitzten Verbrennungsgase vorgewärmt. Für eine Erwärmung der Verbrennungsluft beim Kaltstart des Brenners sorgt eine elektrische Widerstandsheizung 55, die am Leitrohr 51 angebracht ist und nach aussen geführte elektrische Anschlüsse 56, 57 aufweist. Im Strömungsraum 50 verdunstet in die vorgewärmte Verbrennungsluft aus der Brennstoffkammer 30 durch die porösen Wände 31 hindurch austretender Brennstoff. Das Brennstoff-Luft-Gemisch wird zur Verbrennungszone 32 geführt und dort gezündet. Für den Start dient ein in die Verbrennungszone eingeführter Zünder 58.

**Patentansprüche**

1. Brenner zur Ausbildung und Verbrennung eines zündfähigen Gemisches aus flüssigem Brennstoff und Verbrennungsluft, der für die Zufuhr von Brennstoff eine geschlossene Brennstoffkammer (1, 30) mit für den Brennstoff durchlässigen porösen Wänden (2, 31) aufweist, die in einem von vorgewärmter Verbrennungsluft zur Verbrennungszone durchströmten Strömungsraum (5, 50) angeordnet sind, dadurch gekennzeichnet, dass die porösen Wände (2, 31) der Brennstoffkammer (1, 30) zum Ein- und Abschalten des Brenners vom Strömungsraum (5, 50) trennbar sind.

2. Brenner nach Anspruch 1, dadurch gekennzeichnet, dass die Brennstoffkammer (1, 30) gegen die Kraft einer Feder (24, 40) in den Strömungsraum (5, 50) verschiebbar angeordnet ist.

3. Brenner nach Anspruch 1 oder 2, dadurch gekennzeichnet, dass die Brennstoffkammer (1, 30) hydraulisch verschiebbar ist.

4. Brenner nach Anspruch 3, dadurch gekennzeichnet, dass als hydraulisches Betriebsmittel flüssiger Brennstoff verwendet wird.

5. Brenner nach Anspruch 4, dadurch gekennzeichnet, dass zumindest eine Brennstoffleitung (26, 43) vom Innenraum (20, 38) eines die Brennstoffkammer (1, 30) führenden Hydraulikzylinders (14, 35) zum Innenraum der Brennstoffkammer (1, 30) geführt ist und dass in einer an der Brennstoffkammer (1, 30) angeschlossenen Ablaufleitung (28, 45) für den Brennstoff ein Durchflussregelventil (29, 46) eingesetzt ist.

6. Brenner nach Anspruch 5, dadurch gekennzeichnet, dass die Brennstoffkammer (30) an einem im Hydraulikzylinder (35) verschiebbar geführten Hydraulikkolben (36) befestigt ist, dessen der Brennstoffkammer (30) abgewandte Stirnseite (39) den mit Brennstoff gefüllten Innenraum (38) des Hydraulikzylinders (35) begrenzt, und dass die Ablaufleitung (45) mit dem Hydraulikzylinder (35) fest verbunden ist und in eine Ausnehmung (47) des auf der Ablaufleitung (45) gleitend beweglichen Hydraulikkolbens (36) hineinragt.

7. Brenner nach Anspruch 6, dadurch gekennzeichnet, dass am Hydraulikzylinder (35) eine Überlaufleitung (49) für Brennstoff angeschlossen ist, die in einem zur Aufnahme der Brennstoffkammer (30) bestimmten Hydraulikzylinderraum (42) mündet.

## Claims

1. Burner for forming and burning an ignitable mixture of liquid fuel and combustion air, comprising for the introduction of fuel a closed fuel chamber (1, 30) with porous walls (2, 31) which are pervious to the fuel and which are arranged in a throughflow compartment (5, 50) through which preheated combustion air flows to the combustion zone, characterised in that the porous walls (2, 31) of the fuel chamber (1, 30) can be separated from the throughflow compartment (5, 50) for starting and shutting off the burner.

2. Burner according to claim 1, characterised in that the fuel chamber (1, 30) is arranged to be displaceable in opposition to the force of a spring (24, 40) into the throughflow compartment (5, 50).

3. Burner according to claim 1 or 2, characterised in that the fuel chamber (1, 30) is hydraulically displaceable.

4. Burner according to claim 3, characterised in that liquid fuel is used as hydraulic operating medium.

5. Burner according to claim 4, characterised in that at least one fuel conduit (26, 43) leads from the interior (20, 38) of a hydraulic cylinder (14, 35) guiding the fuel chamber (1, 30) to the interior of the fuel chamber (1, 30), and that a throughflow control valve (29, 46) is arranged in a discharge conduit (28, 45) for the fuel, which discharge conduit is connected with the fuel chamber (1, 30).

6. Burner according to claim 5, characterised in that the fuel chamber (30) is secured on a hydraulic piston (36) which is guided displaceably in the hydraulic cylinder (35) and whose face (39) remote from the fuel chamber (30) delimits the fuel-filler interior (38) of the hydraulic cylinder (35), and that the discharge conduit (45) is connected securely to the hydraulic cylinder (35) and projects into a recess (47) of the hydraulic piston (36), said piston being movable in sliding manner on the discharge conduit (45).

7. Burner according to claim 6, characterised in that a fuel overflow conduit (49) is joined to the hydraulic cylinder (35) and opens into a hydraulic cylinder compartment (42) which is intended for receiving the fuel chamber (30).

## Revendications

1. Brûleur, qui est destiné à la formation et à la combustion d'un mélange inflammable de combustible liquide et d'air de combustion, et qui, pour l'amenée de combustible, comprend une chambre à combustible (1, 30) fermée, à parois (2, 31) poreuses, perméables au combustible, disposées dans une chambre d'écoulement (5, 50) parcourue par de l'air de combustion préchauffé allant à la zone de combustion, caractérisé en ce que les parois poreuses (2, 31) de la chambre de combustion (1, 30) peuvent être séparées de la chambre à combustible (1, 30) pour le branchement et pour le débranchement du brûleur (5, 50).

2. Brûleur suivant la revendication 1, caractérisé en ce que la chambre à combustible (1, 30) est montée coulissante dans la chambre d'écoulement (5, 50), à l'encontre de la force d'un ressort (24, 40).

3. Brûleur suivant la revendication 1 ou 2, caractérisé en ce que la chambre à combustible (1, 30) est montée coulissante par voie hydraulique.

4. Brûleur suivant la revendication 3, caractérisé en ce que du combustible liquide est utulisé comme agent de fonctionnement hydraulique.

5. Brûleur suivant la revendication 4, caractérisé en ce qu'au moins un conduit pour le combustible (26, 43) va de la chambre intérieure (20, 38) d'un cylindre hydraulique (14, 35) menant à la chambre à combustible (1, 30), à l'intérieur de la chambre à combustible (1, 30), et en ce qu'une soupape de réglage de débit (29, 46) est montée sur un conduit d'évacuation (28, 45) pour le combustible raccordé à la chambre à combustible (1, 30).

6. Brûleur suivant la revendication 5, caractérisé en ce que la chambre à combustible (30) est fixée à un piston hydraulique (36) monté de manière à pouvoir coulisser sur un cylindre hydraulique (35), la partie frontale (39) de ce piston qui est éloignée de la chambre à combustible (30) délimitant la chambre intérieure (38) emplie de combustible du cylindre hydraulique (35) et en ce que le conduit d'évacuation (45) est relié rigidement au cylindre hydraulique (35) et fait saillie, dans un évidement (47), du piston hydraulique (36) mobile glissant sur le conduit d'évacuation (45).

7. Brûleur suivant la revendication 6, caractérisé en ce qu'au cylindre hydraulique (35) est raccordé un conduit de débordement (49) pour le combustible qui débouche dans une chambre formant cylindre hydraulique (42) adaptée à la réception de la chambre à combustible (30).

FIG. 1

# FIG. 2